# EUROPEAN PATENT APPLICATION

(11) **EP 3 024 118 A1**
(43) Date of publication of application: **25.05.2016**
(21) Application number: 14791802.3
(22) Date of filing: 15.04.2014
(51) Int. Cl.: H02J 13/00

(54) **INTELLIGENT ELECTRICITY LIMITING METHOD, DEVICE AND SYSTEM**

(30) Priority: 18.07.2013 CN 201310298170
(71) Applicant: ZTE Corporation, 518057 Shenzhen City, Guangdong Province (CN)
(72) Inventor: HE, Ying, Shenzhen Guangdong Province 518057 (CN); TANG, Guojun, Shenzhen Guangdong Province 518057 (CN)
(74) Representative: Novagraaf Technologies
(86) International application number: PCT/CN2014/075413
(87) International publication number: WO 2014/176974

(57) **Abstract**

Provided are a method, device and system for restricting electricity intelligently. The method includes: a synchronous data request is sent to an AMI platform; real-time electricity quantity data sent, according to the synchronous data request, by the AMI platform is received; the real-time electricity quantity data is analyzed according to a preset electricity restriction rule, and corresponding electricity restriction control information is acquired; the electricity restriction control information is sent to the AMI platform, so that the AMI platform carries out an intelligent electricity restriction. The method, device and system check and analyze the real-time electricity quantity data, which are acquired by the AMI platform, in a preset area according to a preset electricity restriction rule, and send the corresponding electricity restriction control information to the AMI platform when the real-time electricity quantity data exceed a preset electricity restriction range, so that the AMI platform carries out the intelligent electricity restriction. As the electricity restriction control information can be mutually shared among all the areas, optimized electricity restriction control information which is suitable for respective situations may be acquired in all the areas, thus achieving an optimized energy conservation effect under a condition that living and production of people are not affected, which is more intelligent and humanized.

## Description

### Technical Field

The disclosure relates to the technical field of electricity and communications, in particular to a method, device and system for restricting electricity intelligently.

### Background

In recent years, with the increasingly prominent problems of lack of energy and environment pollution, energy conservation and emission reduction have become important tasks in the nowadays society, and electricity economizing in electricity resources is an important measure for solving the problem of energy waste in the energy conservation and emission reduction.

At present, our country mainly implements an artificial compulsive electricity restriction in the aspect of electricity restriction, that is, the compulsive power rationing on a certain area with administrative measures is implemented according to some conventional statistical data and experiences, thus fulfilling the aims of energy conservation and emission reduction. Such an electricity restriction mode may reduce the waste of electricity resources to a certain extent, but also inevitably disturbs the normal living and production of people, and, in the present high-tech age, such way is not intelligent and humanized enough. Moreover, the compulsive power rationing is very bad for cultivating people's consciousness of energy conservation and emission reduction. With the deep propulsion of life intelligence and the popularization and application of an Advanced Metering Infrastructure (AMI), we have an urgent need to invent a more intelligent and humanized method for restricting electricity intelligently.

### Summary

The disclosure provides a method, device and system for restricting electricity intelligently, which aim at implementing more intelligent and humanized electricity restriction and energy conservation.

A method for restricting electricity intelligently is provided, and the method includes: a synchronous data request is sent to an Advanced Metering Infrastructure (AMI) platform; real-time electricity quantity data sent, according to the synchronous data request, by the AMI platform is received; the real-time electricity quantity data is analyzed according to a preset electricity restriction rule to acquire corresponding electricity restriction control information; the electricity restriction control information is sent to the AMI platform, so that the AMI platform may carry out an intelligent electricity restriction.

Preferably, the sending the synchronous data request to the AMI platform comprises: the synchronous data request for acquiring an electricity quantity in a preset area is sent to the AMI platform every preset time period.

Preferably, the analyzing the real-time electricity quantity data according to the preset electricity restriction rule to acquire the corresponding electricity restriction control information includes: the real-time electricity quantity data are classified and gathered according to different types; the classified real-time electricity quantity data is checked and analyzed according to the preset electricity restriction rule; when the classified real-time electricity quantity data exceed a preset electricity restriction range, the corresponding electricity restriction control information is generated.

A device for restricting electricity intelligently is further provided, and the device includes: a first sending component configured to send a synchronous data request to an AMI platform; a receiving component configured to receive real-time electricity quantity data sent, according to the synchronous data request, by the AMI platform; an analysis and acquisition component configured to analyze the real-time electricity quantity data according to a preset electricity restriction rule to acquire corresponding electricity restriction control information; a second sending component configured to send the electricity restriction control information to the AMI platform, so that the AMI platform may carry out an intelligent electricity restriction.

Preferably, the first sending component is configured to send the synchronous data request for acquiring an electricity quantity in a preset area to the AMI platform every preset time period.

Preferably, the analysis and acquisition component includes: a classification and counting element configured to classify and gather statistics on the real-time electricity quantity data according to different types, a verification and analysis element configured to check and analyze the classified real-time electricity quantity data according to the preset electricity restriction rule; a generation element configured to, when the classified real-time electricity quantity data exceed a preset electricity restriction range, generate the corresponding electricity restriction control information.

A system for restricting electricity intelligently is further provided, including: an AMI platform and a plurality of devices for restricting electricity intelligently, wherein,
each of the plurality of devices for restricting electricity intelligently is configured to send a synchronous data request to the AMI platform, receive real-time electricity quantity data, according to the synchronous data request, sent by the AMI platform, analyze the real-time electricity quantity data according to a preset electricity restriction rule, acquire corresponding electricity restriction control information, and send the electricity restriction control information to the AMI platform, so that the AMI platform may carry out an intelligent electricity restriction;
the AMI platform is configured to receive the synchronous data request sent by the each of the plurality of devices for restricting electricity intelligently, acquire the real-time electricity quantity data in a preset area according to the synchronous data request, send the real-time electricity quantity data to the each of the plurality of devices for restricting electricity intelligently, receive the electricity restriction control information sent by the each of the plurality of devices for restricting electricity intelligently, and restrict the electricity intelligently according to the electricity restriction control information.

Preferably, the plurality of devices for restricting electricity intelligently are further configured to mutually share the electricity restriction control information.

Preferably, the AMI platform is further configured to send a control instruction according to the electricity restriction control information.

Preferably, the AMI platform is further configured to generate and send alarm information according to the electricity restriction control information.

In the method, device and system for restricting electricity intelligently, the real-time electricity quantity data, which are acquired by the AMI platform, in the preset area is checked and analyzed according to the preset electricity restriction rule which does not affect the living and the production of people; when the real-time electricity quantity data exceed the preset electricity restriction range, the corresponding electricity restriction control information is sent to the AMI platform, and the AMI platform restrict the electricity intelligently according to the electricity restriction control information; as the electricity restriction control information may be mutually shared among all areas, optimized electricity restriction control information which is suitable for respective situations may be acquired in the respective areas, thus achieving an optimal energy conservation effect under a condition that the living and the production of people are not affected to the maximum extent, which is more intelligent and humanized.

### Brief Description of the Drawings

Fig. 1 is a flowchart of a method for restricting electricity intelligently according to a prefered embodiment of the disclosure;
Fig. 2 is a flowchart of analyzing real-time electricity quantity data according to a preset electricity restriction rule to acquire corresponding electricity restriction control information in a method for restricting electricity intelligently according to a prefered embodiment of the disclosure;
Fig. 3 is a structure diagram of a device for restricting electricity intelligently according to a prefered embodiment of the disclosure;
Fig. 4 is a structure diagram of an analysis and acquisition component in a device for restricting electricity intelligently according to a prefered embodiment of the disclosure; and
Fig. 5 is a structure diagram of a system for restricting electricity intelligently according to a prefered embodiment of the disclosure.

### Detailed Description of the Embodiments

A further description is made below with the drawings in order to make the technical scheme of the disclosure clearer and more definite.

The solution provided by the embodiment of the disclosure is as follows: real-time electricity quantity data, which are acquired by an Advanced Metering Infrastructure (AMI) platform, in a preset area is checked and analyzed according to a preset electricity restriction rule which may not affect the living and the production of people; the corresponding electricity restriction control information is sent to the AMI platform when the real-time electricity quantity data exceed a preset electricity restriction range; and the AMI platform carries out an intelligent electricity restriction according to the electricity restriction control information. As the electricity restriction control information may be mutually shared among all areas, optimized electricity restriction control information which is suitable for a situation of each area respectively may be acquired.

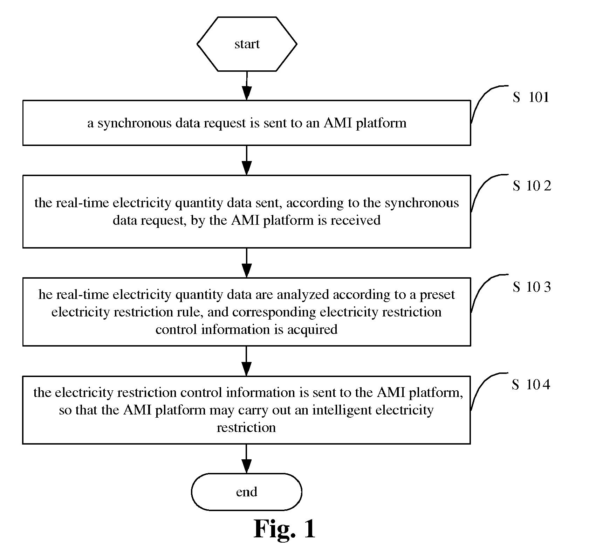

As shown in Fig. 1, a prefered embodiment of the disclosure provides a method for restricting electricity intelligently, including the following blocks.

In block S101: a synchronous data request is sent to an AMI platform.

The synchronous data request for synchronizing an electricity quantity in a preset area is sent to the AMI platform every preset time period, wherein the preset area is a management area with a corresponding size and one preset area may be set according to regions with different sizes. The synchronous data request is used for requesting to acquire electricity quantity statistical data values of all electric meters in the preset area from the AMI platform. The preset time is set, and the synchronous data request is sent to the AMI platform every the preset time period, so as to ensure that the acquired electricity quantity statistical data values of all the electric meters in the preset area are real-time updated values, and are kept consistent with the electricity quantity used by residents. In the embodiment, the preset time is preferably 1 hour, and of course, other time intervals are not restricted to be the preset time.

In block S102: the real-time electricity quantity data sent, according to the synchronous data request, by the AMI platform is received.

After the synchronous data request is sent to the AMI platform, the AMI platform acquires the real-time electricity quantity data in the preset area according to the synchronous data request; the real-time electricity quantity data forwarded by the AMI platform are received, and stored.

In block S103: the real-time electricity quantity data are analyzed according to a preset electricity restriction rule, and corresponding electricity restriction control information is acquired.

The stored real-time electricity quantity data are classified and gathered statistics according to different types. The stored real-time electricity quantity data may be classified according to an electricity use type, an electricity use area, an electricity use time period and the like. For example, according to the electricity use type, the real-time electricity quantity data may be classified into resident living electricity, public facility electricity and the like; according to the electricity use area, the real-time electricity quantity data may be classified into living area electricity, other area electricity and the like; according to the electricity use time period, the real-time electricity quantity data may be classified into rush hour electricity, normal time electricity and the like. After the real-time electricity quantity data are classified, the classified real-time electricity quantity data is gathered statistics according to its different classifications.

After the real-time electricity quantity data are classified and gathered statistics, an electricity restriction rule meeting a requirement may be preset, for example, rules such as "resident living electricity first", "equal distribution first" and "living area electricity first" may be set; the gathered statistics on the real-time electricity quantity data are checked and analyzed according to the preset electricity restriction rule; when it is determined that the real-time electricity quantity data exceed an electricity restriction range regulated by the preset electricity restriction rule, corresponding electricity restriction control information is generated, so as to control the current real-time electricity quantity data to return to the electricity restriction range regulated by the preset electricity restriction rule. For example, when the preset electricity restriction rule is the "resident living electricity first", an effect to be achieved by the electricity restriction control information is to stop supplying of power of other electricity use types in the area, so as to guarantee normal electricity use of the residents; when the preset electricity restriction rule is the "resident living electricity first" and the "living area electricity first", an effect to be achieved by the electricity restriction control information is to stop supplying of power of non-resident living electricity in a non-living area. Meanwhile, the electricity restriction control information is stored for reference in the next same time period or under the same electricity use condition, so that it does not need to rely on the synchronization of the data every time, and a network congestion may be avoided more conveniently and flexibly.

In block S104: the electricity restriction control information is sent to the AMI platform, so that the AMI platform may carry out an intelligent electricity restriction.

The electricity restriction control information is sent to the AMI platform, so that the AMI platform controls the electric meter in the preset area according to the electricity restriction control information, thus achieving an effect of intelligent electricity restriction.

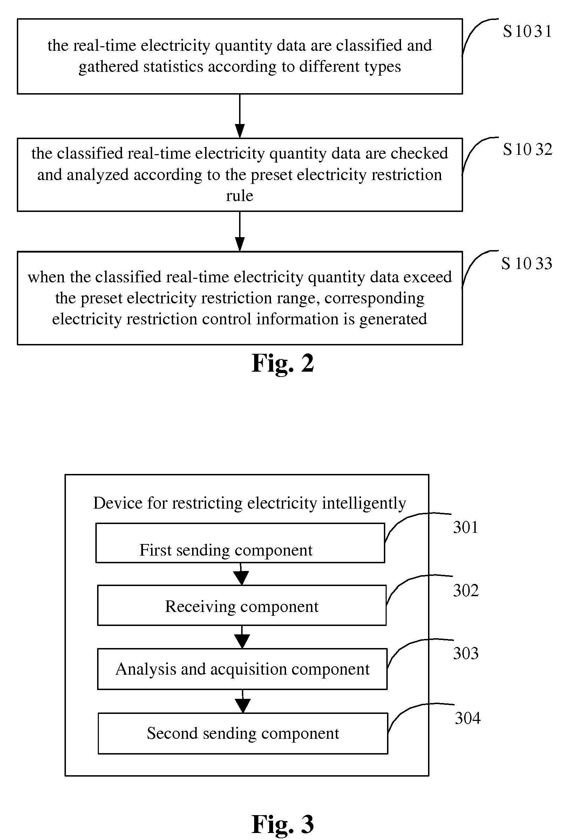

Specifically, as shown in Fig. 2, the block S103 may include the following blocks.

In block S1031: the real-time electricity quantity data are classified and gathered statistics according to different types.

In block S1032: the classified real-time electricity quantity data are checked and analyzed according to the preset electricity restriction rule.

In block S1033: when the classified real-time electricity quantity data exceed the preset electricity restriction range, corresponding electricity restriction control information is generated.

In the embodiment, the real-time electricity quantity data, which are acquired by the AMI platform, in the preset area is checked and analyzed according to the preset electricity restriction rule which does not affect the living and the production of people; when the real-time electricity quantity data exceed the preset electricity restriction range, the corresponding electricity restriction control information is sent to the AMI platform, thus realizing real-time monitoring management and energy conservation electricity restriction on the electricity quantity in the preset area under a condition that the living and the production of people are not affected, which are more intelligent and humanized.

As shown in Fig. 3, a prefered embodiment of the disclosure provides a device for restricting electricity intelligently. The device includes: a first sending component 301, a receiving component 302, an analysis and acquisition component 303 and a second sending component 304.

The first sending component 301 is configured to send a synchronous data request to an AMI platform.

The synchronous data request for synchronizing an electricity quantity in a preset area is sent to the AMI platform every preset time period, wherein the preset area is a management area with a corresponding size and one preset area may be set according to regions with different sizes. The synchronous data request is used for requesting to acquire electricity quantity statistical data values of all electric meters in the preset area from the AMI platform. The preset time is set, and the synchronous data request is sent to the AMI platform every the preset time period, so as to ensure that the acquired electricity quantity statistical data values of all the electric meters in the preset area are real-time updated values, and are kept consistent with the electricity quantity used by residents. In the embodiment, the preset time is preferably 1 hour, and of course, other time intervals are not restricted to be the preset time.

The receiving component 302 is configured to receive real-time electricity quantity data sent, according to the synchronous data request, by the AMI platform.

After the synchronous data request is sent to the AMI platform, the AMI platform acquires the real-time electricity quantity data in the preset area according to the synchronous data request, and the receiving component 302 receives real-time electricity quantity data forwarded by the AMI platform, and stores the received real-time electricity quantity data.

The analysis and acquisition component 303 is configured to analyze the real-time electricity quantity data according to a preset electricity restriction rule to acquire corresponding electricity restriction control information.

The stored real-time electricity quantity data are classified and gathered statistics according to different types. The stored real-time electricity quantity data may be classified according to an electricity use type, an electricity use area, an electricity use time period and the like. For example, according to the electricity use type, the real-time electricity quantity data may be classified into resident living electricity, public facility electricity and the like; according to the electricity use area, the real-time electricity quantity data may be classified into living area electricity, other area electricity and the like; according to the electricity use time period, the real-time electricity quantity data may be classified into rush hour electricity, normal time electricity and the like. After the real-time electricity quantity data are classified, the classified real-time electricity quantity data is gathered statistics according to its different classifications.

After the real-time electricity quantity data are classified and gathered statistics, an electricity restriction rule meeting a requirement may be preset, for example, rules such as "resident living electricity first", "equal distribution first" and "living area electricity first" may be set; the gathered statistics on the real-time electricity quantity data are checked and analyzed according to the preset electricity restriction rule; when it is determined that the real-time electricity quantity data exceed an electricity restriction range regulated by the preset electricity restriction rule, corresponding electricity restriction control information is generated, so as to control the current real-time electricity quantity data to return to the electricity restriction range regulated by the preset electricity restriction rule. For example, when the preset electricity restriction rule is the "resident living electricity first", an effect to be achieved by the electricity restriction control information is to stop supplying of power of other electricity use types in the area, so as to guarantee normal electricity use of the residents; when the preset electricity restriction rule is the "resident living electricity first" and the "living area electricity first", an effect to be achieved by the electricity restriction control information is to stop supplying of power of non-resident living electricity in a non-living area. Meanwhile, the electricity restriction control information is stored for reference in the next same time period or under the same electricity use condition, so that it does not need to rely on the synchronization of the data every time, and a network congestion may be avoided more conveniently and flexibly.

The second sending component 304 is configured to send the electricity restriction control information to the AMI platform, so that the AMI platform may carry out an intelligent electricity restriction.

The second sending component sends the electricity restriction control information to the AMI platform, so that the AMI platform controls the electric meter in the preset area according to the electricity restriction control information, thus achieving an effect of intelligent electricity restriction.

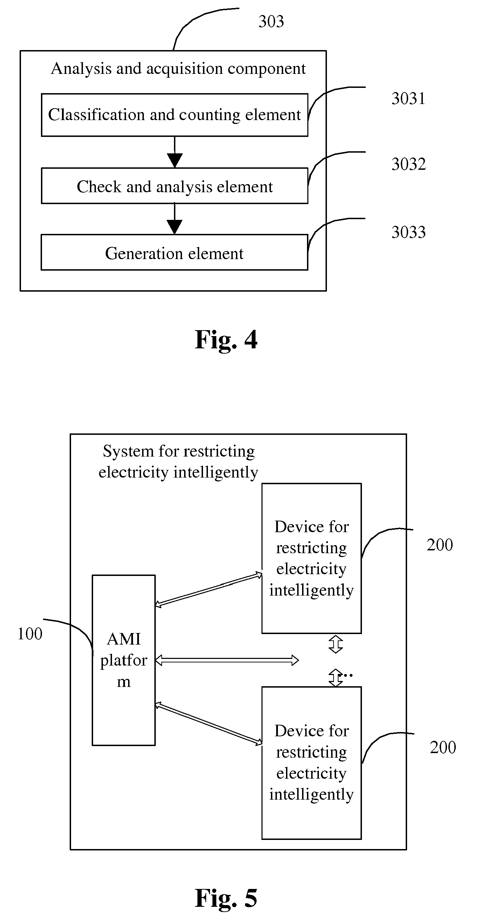

Specifically, as shown in Fig. 4, the analysis and acquisition component 303 may include: a classification and counting element 3031, a check and analysis element 3032 and a generation element 3033.

The classification and counting element 3031 is configured to classify and gather statistics on the real-time electricity quantity data according to different types.

The check and analysis element 3032 is configured to check and analyze the classified real-time electricity quantity data according to the preset electricity restriction rule.

The generation element 3033 is configured to, when the classified real-time electricity quantity data exceed the preset electricity restriction range, generate corresponding electricity restriction control information.

In the embodiment, the real-time electricity quantity data, which are acquired by the AMI platform, in the preset area is checked and analyzed according to the preset electricity restriction rule which does not affect the living and the production of people; when the real-time electricity quantity data exceed the preset electricity restriction range, the corresponding electricity restriction control information is sent to the AMI platform, thus realizing real-time monitoring management and energy conservation electricity restriction on the electricity quantity in the preset area under a condition that the living and the production of people are not affected, which are more intelligent and humanized.

As shown in Fig. 5, a prefered embodiment of the disclosure provides a system for restricting electricity intelligently, including: an AMI platform 100 and a plurality of devices for restricting electricity intelligently 200.

The devices for restricting electricity intelligently 200 are configured to send a synchronous data request to the AMI platform 100, receive real-time electricity quantity data sent, according to the synchronous data request, by the AMI platform, analyze the real-time electricity quantity data according to a preset electricity restriction rule to acquire corresponding electricity restriction control information, and send the electricity restriction control information to the AMI platform, so that the AMI platform may carry out an intelligent electricity restriction.

The AMI platform 100 is configured to receive the synchronous data request sent by the devices for restricting electricity intelligently 200, acquire the real-time electricity quantity data in a preset area according to the synchronous data request, send the real-time electricity quantity data to the devices for restricting electricity intelligently 200, receive the electricity restriction control information sent by the devices for restricting electricity intelligently 200, and carry out the intelligent electricity restriction according to the electricity restriction control information.

The plurality of devices for restricting electricity intelligently 200 are classified according to areas. One preset area may be set to be managed by one device for restricting electricity intelligently 200; furthermore, the plurality of devices for restricting electricity intelligently 200 may be networked, so as to realize interaction and sharing of the information among the plurality of devices for restricting electricity intelligently 200 in different areas. When analyzing the real-time electricity quantity data in a preset area according to the preset electricity restriction rule and acquiring the corresponding electricity restriction control information, one device for restricting electricity intelligently 200 shares the acquired electricity restriction control information among the plurality of devices for restricting electricity intelligently 200, and other devices for restricting electricity intelligently may refer to the shared electricity restriction control information according to the electricity use situations of the residents in the respective areas, so as to analyze and acquire the optimized electricity restriction control information, which is suitable for the electricity use situations of the respective areas, according to the electricity use situations and the electricity restriction control information of other areas. Therefore, the plurality of devices for restricting electricity intelligently 200 in the whole area may refer to one another favourably and be dynamically adjusted, and finally acquire the optimized electricity restriction control information of the electricity use situation of the whole area.

After receiving the electricity restriction control information sent by the devices for restricting electricity intelligently 200, the AMI platform 100 automatically sends a control instruction according to contents of the electricity restriction control information, controls switch off of an electric meter switch in the preset area, and automatically performs electricity restriction; the operation is realized without consuming a labour, which is quicker and more intelligent and saves time and resources.

In another embodiment, after receiving the electricity restriction control information sent by the devices for restricting electricity intelligently 200, the AMI platform 100 generates and sends alarm information according to the contents of the electricity restriction control information, so as to instruct a relevant worker to perform an electricity restriction operation; when receiving the alarm information, the relevant worker may perform the corresponding electricity restriction operation, and may also select to delay the electricity restriction or not perform the electricity restriction temporarily under a special condition, so that it is more flexible and humanized to handle with various emergencies probably appearing in an actual application.

In the embodiments provided by the method, device and system for restricting electricity intelligently, the real-time electricity quantity data, which are acquired by the AMI platform, in the preset area is checked and analyzed according to the preset electricity restriction rule which does not affect the living and the production of people; when the real-time electricity quantity data exceed the preset electricity restriction range, the corresponding electricity restriction control information is sent to the AMI platform, and the AMI platform carries out the intelligent electricity restriction according to the electricity restriction control information; as the electricity restriction control information may be mutually shared among all areas, optimized electricity restriction control information, which is suitable for respective situations may be acquired in the respective areas, thus achieving an optimal energy conservation effect under a condition that the living and the production of people are not affected to the maximum extent, which is more intelligent and humanized as well as industrially practical.

### Industrial Applicability

In the technical scheme of the disclosure, the electricity restriction control information may be mutually shared in the respective areas, and the AMI platform may carry out the intelligent electricity restriction according to the electricity restriction control information, thus achieving the optimal energy conservation effect under the condition that the living and the production of people are not affected to the maximum extent.

The above is only the prefered embodiments of the disclosure and not intended to limit the patent scope of the disclosure, and any equivalent structure or flow transformation made by virtue of contents of the specification and drawings of the disclosure or direct or indirect application of the contents to other related technical fields shall fall within the scope of patent protection of the disclosure in a similar way.

## Claims

1. A method for restricting electricity intelligently, **characterized by** comprising:
sending a synchronous data request to an Advanced Metering Infrastructure (AMI) platform;
receiving real-time electricity quantity data sent, according to the synchronous data request, by the AMI platform;
analyzing the real-time electricity quantity data according to a preset electricity restriction rule to acquire corresponding electricity restriction control information;
sending the electricity restriction control information to the AMI platform to enable the AMI platform to restrict the electricity intelligently.

2. The method according to claim 1, **characterized in that** the sending the synchronous data request to the AMI platform comprises:
sending the synchronous data request for acquiring an electricity quantity in a preset area to the AMI platform every preset time period.

3. The method according to claim 2, **characterized in that** the analyzing the real-time electricity quantity data according to the preset electricity restriction rule to acquire the corresponding electricity restriction control information comprises:
classifying and gathering statistics on the real-time electricity quantity data according to different types of the real-time electricity quantity data;
checking and analyzing the classified real-time electricity quantity data according to the preset electricity restriction rule;
generating the corresponding electricity restriction control information when the classified real-time electricity quantity data exceed a preset electricity restriction range.

4. A device for restricting electricity intelligently, **characterized by** comprising:
a first sending component configured to send a synchronous data request to an AMI platform;
a receiving component configured to receive real-time electricity quantity data sent, according to the synchronous data request, by the AMI platform;
an analysis and acquisition component configured to analyze the real-time electricity quantity data according to a preset electricity restriction rule to acquire corresponding electricity restriction control information;
a second sending component configured to send the electricity restriction control information to the AMI platform to enable the AMI platform to restrict the electricity intelligently.

5. The device according to claim 4, **characterized in that** the first sending component is configured to send the synchronous data request for acquiring an electricity quantity in a preset area to the AMI platform every preset time period.

6. The device according to claim 5, **characterized in that** the analysis and acquisition component comprises:
a classification and counting element configured to classify and gather statistics on the real-time electricity quantity data according to different types of the real-time electricity quantity data;
a verification and analysis element configured to check and analyze the classified real-time electricity quantity data according to the preset electricity restriction rule;
a generation element configured to, when the classified real-time electricity quantity data exceed a preset electricity restriction range, generate the corresponding electricity restriction control information.

7. A system for restricting electricity intelligently, **characterized by** comprising: an AMI platform and a plurality of devices for restricting electricity intelligently, wherein,
each of the plurality of devices for restricting electricity intelligently is configured to send a synchronous data request to the AMI platform, receive real-time electricity quantity data sent, according to the synchronous data request, by the AMI platform, analyze the real-time electricity quantity data according to a preset electricity restriction rule to acquire corresponding electricity restriction control information, and send the electricity restriction control information to the AMI platform to enable the AMI restrict the electricity intelligently;
the AMI platform is configured to receive the synchronous data request sent by the each of the plurality of devices for restricting electricity intelligently, acquire the real-time electricity quantity data in a preset area according to the synchronous data request, send the real-time electricity quantity data to the each of the plurality of devices for restricting electricity intelligently respectively, receive the electricity restriction control information sent by the each of the plurality of devices for restricting electricity intelligently respectively, and restrict the electricity intelligently according to the electricity restriction control information.

8. The system according to claim 7, **characterized in that** the plurality of devices for restricting electricity intelligently are further configured to mutually share the electricity restriction control information.

9. The system according to claim 7, **characterized in that** the AMI platform is further configured to send a control instruction according to the electricity restriction control information.

10. The system according to claim 7, **characterized in that** the AMI platform is further configured to generate and send alarm information according to the electricity restriction control information.
